# EUROPEAN PATENT SPECIFICATION

(11) **EP 3 141 357 B1**
(45) Date of publication and mention of the grant of the patent: **10.04.2024**
(21) Application number: 16001993.1
(22) Date of filing: 13.09.2016
(51) Int. Cl.: B26B 15/00, A01G 3/033, A01G 3/037

(54) **ELECTRIC SCISSORS**
ELEKTRISCHE SCHERE
CISEAUX ÉLECTRIQUES

(30) Priority: 14.09.2015 JP 2015181256
(43) Date of publication of application: 15.03.2017
(73) Proprietor: MAX CO., LTD., Chuo-ku, Tokyo 103-8502 (JP)
(72) Inventor: Ishiguro, Hiroki, Chuo-ku, 103-8502 (JP)
(74) Representative: Samson & Partner Patentanwälte mbB

(56) References cited:
- WO-A2-98/28111
- DE-U1- 8 802 877
- US-A1- 2011 061 242
- US-A1- 2012 246 942

## Description

### TECHNICAL FIELD

The present invention relates to electric scissors that are used by electrically opening and closing blade sections.

### BACKGROUND

These types of electric scissors, for example, are used in pruning of trees or the like to be able to cut a cutting target such as branches by opening and closing a pair of blade sections by a driving force of a motor.

Because there is a risk of injury if the electric scissors are manipulated by mistake, it is desirable to provide a mechanism that does not easily operate when children or people who do not know how to use the machine casually touch.

For example, JP-A-2013-166244 discloses a configuration in which an auxiliary trigger is provided in a grip, and the motor is driven when pulling a main trigger, while grasping the auxiliary trigger. According to such a configuration, if both of the auxiliary trigger and the main trigger are not manipulated, the electric scissors do not perform a cutting operation. Thus, it is possible to prevent machine from being easily operated only by casual touch of children or people who do not know how to use the machine.

Further, JP-A-2009-39034 discloses a configuration in which the machine may not be operated only by turning on a main power source, and the machine does not enter an operable state unless the trigger switch is pressed long.

In the configuration disclosed in JP-A-2013-166244 mentioned above, because it is not possible to perform the cutting operation unless the user grasps the grip, in some cases, the usability may be poor. For example, it is difficult to grasp the grip depending on the posture of performing the work, and the usability is poor in such a situation.

In the configuration disclosed in JP-A-2009-39034 mentioned above, since the machine is operated by a simple operation such as pressing the trigger switch long, there is a problem that even children or people who do not know how to use the machine may unintentionally operate the machine.

Other configurations of electric scissors comprising a pair of blade sections, a motor that drives at least one of the blade sections, a trigger for controlling the motor and a safety switch are disclosed in WO 98/28111 A2, US 2011/061242 A1, DE 88 02 877 U1 and US 2012/246942 A1.

Accordingly, an object of the present invention is to provide electric scissors which is provided with a safety mechanism capable of effectively preventing children or people who do not know how to use the machine from operating the machine by mistake, and in which the usability is not deteriorated even by providing the safety mechanism.

The present invention has been made to solve the problems given above, and has the following characteristics.

### SUMMARY

The invention is defined in the appended independent claims. Dependent claims relate to preferred embodiments.
(1) Electric scissors includes two blade sections, a power source, a manipulating member and an unlock switch. The power source operates to close at least one of the two blade sections. The manipulating member controls an operation of the power source. The unlock switch is provided separately from the manipulating member. The electric scissors are configured to be in a locked state which nullifies the operation of the power source and a standby state in which the power source is operated by manipulation of the manipulating member. When the manipulating member is manipulated at a predetermined timing in the locked state and when the unlock switch is manipulated at a predetermined timing in the locked state, the electric scissors are set in the standby state.
(2) In the electric scissors according to (1), just after a main power source is turned on, the electric scissors are in the locked state.
(3) In the electric scissors according to (1) or (2), the unlock switch is provided at a position where a hand does not touch when a finger of the hand is on the manipulating member.
(4) In the electric scissors according to any one of (1) to (3), when the manipulating member and the unlock switch are manipulated at the same time in the locked state, the electric scissors are set in the standby state.
(5) In the electric scissors according to any one of (1) to (4), when the manipulation is not detected for a predetermined time or more in the standby state, the electric scissors are set in the locked state.
(6) The electric scissors according to any one of (1) to (5), further includes a housing. The unlock switch is provided at a rear side of the housing.

According to the invention described in (1), the electric scissors are configured to be able to obtain a locked state that does not allow the operation of the power source, and a standby state in which the power source is operated by manipulation of the manipulating member, and when the manipulating member and the unlock switch are manipulated in the locked state at a predetermined timing, the standby state is set. That is, based on the fact that the manipulating member and the unlock switch are manipulated at a predetermined timing, the state transition from the locked state to the standby state is set, and the machine enters an operable state. Thus, since the machine does not enter the operable state unless a special manipulation such as manipulating a plurality of switches is performed, the machine does not work even if children or people who do not know how to use the machine touch the machine. Because the machine is not operated unless a special manipulation is performed in this way, it is possible to effectively prevent an accident.

Since there is no restriction such as requiring the manipulation of the manipulating member by grasping the grip as in the configuration described in JP-A-2013-166244, it is possible to perform the manipulation without problems even in a posture in which the user feels difficult to grasp the grip. That is, there is no problem that the machine usability is deteriorated as a result of enhanced safety.

According to the invention described in (2), just after turning on the main power source, the locked state is set. According to such a configuration, the machine is not operated, only by turning on the main power source, even when manipulating the manipulating member. Thus, there is no risk even when children or people who do not know how to use the machine manipulate the manipulating member by mistake.

According to the invention described in (3), the unlock switch is provided at a position of not touching by hand while putting finger on the manipulating member. According to such a configuration, there is a low possibility that the unlock switch and the manipulating member are manipulated by chance. In other words, since there is a low possibility that children or people who do not know how to use the machine release the lock by mistake, it is possible to further enhance the safety.

According to the invention described in (4), when the manipulating member and the unlock switch are manipulated in the locked state at the same time, the standby state is set. According to such a configuration, since it is possible to transition from the locked state to the standby state by a simple manipulation, workability is good.

According to the invention described in (5), when the manipulation is not detected for a predetermined time or more in the standby state, the locked state is set. According to such a configuration, the machine is not left for a long time in the standby state. Since the machine left between the works is not operated even when children or people who do not know how to use the machine manipulate the machine by mistake, it is possible to enhance the safety.

### BRIEF DESCRIPTION OF THE DRAWINGS

Fig. 1 is a right side view of electric scissors;
Fig. 2 is a right side view illustrating an internal structure of the electric scissors;
Fig. 3 is a left side view illustrating the internal structure of the electric scissors;
Figs. 4A and 4B are explanatory views illustrating a cutting operation, wherein Fig. 4A is a diagram of an open state of a blade section, and Fig. 4B is a diagram of a closed state of the blade section;
Figs. 5A and 5C are explanatory views illustrating as operation of a manipulating member, wherein Fig. 5A is a diagram of a state of not manipulating the manipulating member, Fig. 5B is a diagram of a state of manipulating a first manipulating section, and Fig. 5C is a diagram of a state of manipulating a second manipulating section;
Fig. 6 is a perspective view of the electric scissors seen from a rear part;
Figs. 7A and 7B are diagrams illustrating an internal structure of a rear portion of the electric scissors, wherein Fig. 7A is a diagram of a non-pressed state of an unlock switch, and Fig. 7B is a diagram of a pressed state of the unlock switch; and
Fig. 8 is a right side view of the electric scissors according to another embodiment.

### DETAILED DESCRIPTION

Embodiments of the present invention will be described with reference to drawings.

Electric scissors 10 according to the present embodiment are, for example, used in pruning of trees or the like to cut the cutting object, such as the branches by opening and closing a pair of blade sections 18 and 19 by the driving force of a motor 12 as a power source.

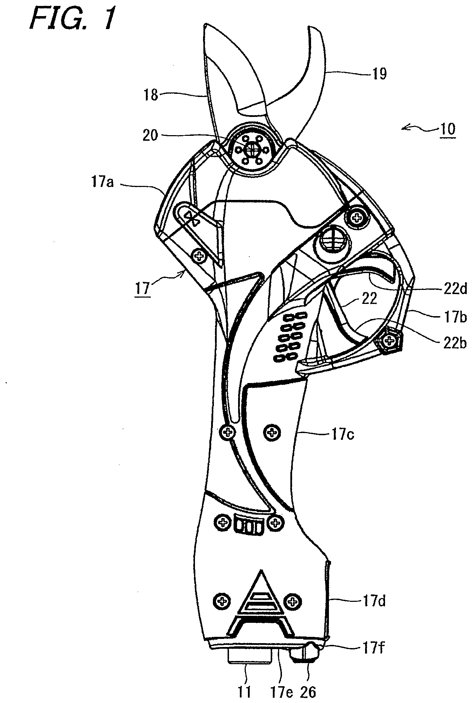

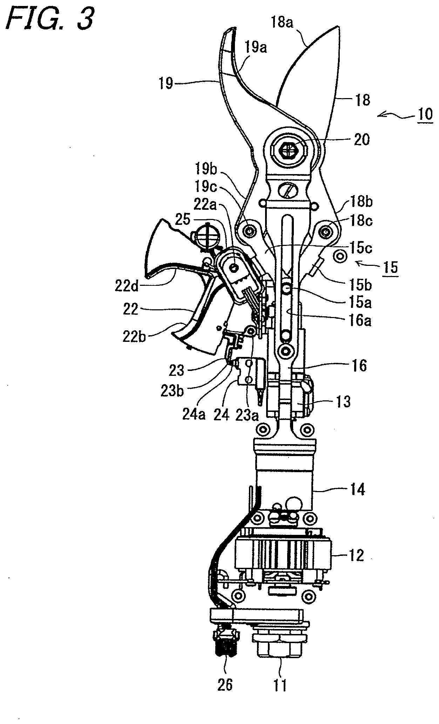

As illustrated in Figs. 1 to 3, the electric scissors 10 are equipped with a housing 17, a cable connector 11 provided at a rear end 17d of the housing 17, a motor 12, a ball screw mechanism 13 for converting the rotary operation of the motor 12 into a linear operation, a support member 16 for guiding the rectilinear movement of the ball screw mechanism 13, a link mechanism 15 for converting the rectilinear movement of the ball screw mechanism 13 into the opening and closing operation of two blade sections 18 and 19, the first blade section 18 and the second blade section 19 actuated by the link mechanism 15, a manipulating member 22 provided as a manipulating section for controlling the motor 12, a oscillating member 23 that oscillates to follow the manipulating member 22, a micro-switch 24 in which a contact point is pressed by the oscillating member 23, a sensor 25 for detecting a rotation angle of the manipulating member 22, and an unlock switch 26 that is provided separately from the manipulating member 22.

Although it is not particularly illustrated, the housing 17 is made up of two divided pieces, and houses the operating mechanism therein to cover substantially the whole machine. The housing 17 includes a link cover 17a as a portion that covers the link mechanism 15, a manipulating member guard 17b formed in a hoop shape to cover the periphery of the manipulating member 22, a grip 17c formed to be gripped by a user, and a rear end 17d provided in the rear portion of the grip 17c.

The link cover 17a is provided at the front end of the housing 17 to house the link mechanism 15, and the first blade section 18 and the second blade section 19 protrude from the front end.

The manipulating member guard 17b is provided at the rear lower side of the link cover 17a, and is provided at a boundary between the link cover 17a and the grip 17c. The manipulating member guard 17b is formed in a hoop shape, and is disposed to be able to hook the index finger into the hoop-shaped manipulating member guard 17b when the user grasps the grip 17c. The manipulating member 22 is exposed to be manipulated inside the manipulating member guard 17b. Although the details will be described later, the first manipulating section 22b (trigger) of the manipulating member 22 is exposed to the front (the grip 17c side) to be manipulated, and the second manipulating section 22d of the manipulating member 22 is exposed to the front (the link cover 17a side) to be manipulated.

The grip 17c is thinner than the link cover 17a, is formed to be slightly thinner than the rear end 17d, and has a shape that is easily grasped by the user. A ball screw mechanism 13 is built in the grip 17c.

The rear end 17d provided at the rear end of the housing 17 houses the motor 12 or the like, and a cable connector 11 is provided on a rear end surface 17e.

The cable connector 11 is a part for connecting a cable (not illustrated), and includes a terminal for connecting the power lines and signal lines. The cable connected to the cable connecting unit 11 is connected to a power source device (not illustrated). A power switch is provided in the power source device or the cable, and by turning on the power switch, the power is supplied to the electric scissors 10 from the power source via the cable.

The motor 12 is a power source that operates to close the first blade section 18 and the second blade section 19, and is manipulated by the power supplied from the power source device. An output shaft of the motor 12 is connected to the ball screw mechanism 13 to be described later. A speed reduction mechanism 14 may be provided between the output shaft of the motor 12 and the ball screw mechanism 13, and may directly connect the output shaft of the motor 12 and the ball screw mechanism 13.

The ball screw mechanism 13 converts the rotary operation of the motor 12 into the linear operation. Although it is not particularly illustrated, the ball screw mechanism 13 includes a screw shaft that rotates by receiving the rotational force of the motor 12, and a nut that meshes with the screw groove of the screw shaft. Thus, when the screw shaft is rotated by the driving force of the motor 12, the nut is formed to linearly move along the screw shaft. A drive shaft 15a of the link mechanism 15 to be described later is connected to the nut, and the drive shaft 15a is formed to linearly move back and forth integrally with the nut.

The support member 16 is to guide the rectilinear movement of the ball screw mechanism 13. A guide groove 16a extending in the guide direction is provided in the support member 16, and the drive shaft 15a of the link mechanism 15 is engaged with the guide groove 16a. Therefore, the nut and the drive shaft 15a are adapted to move along the extending direction of the guide groove 16a.

The link mechanism 15 converts the rectilinear movement of the drive shaft 15a into the opening and closing operation of the first blade section 18 and the second blade section 19. The link mechanism 15 includes a first link 15b and a second link 15c which are pivotally connected by the drive shaft 15a. The first link 15b has one end connected to the drive shaft 15a, and the other end connected to the first blade section 18 via the connecting shaft 18c. The second link 15c has one end connected to the drive shaft 15a, and the other end connected to the second blade section 19 via the connecting shaft 19c.

The first blade section 18 and the second blade section 19 are pivotally supported by the blade shaft 20 as a fulcrum, and are combined so as to intersect with each other in the blade shaft 20. A blade is formed in a cutting portion 18a of a tip side of the first blade section 18 than the blade shaft 20, and a base portion 18b of the base side than the blade shaft 20 is pivotally connected to the first link 15b via a connecting shaft 18c. Similarly, a blade is formed in a cutting portion 19a of the tip side of the second blade section 19 than the blade shaft 20, and a base portion 19b of the base side than the blade shaft 20 is pivotally connected to the second link 15c via the connecting shaft 19c.

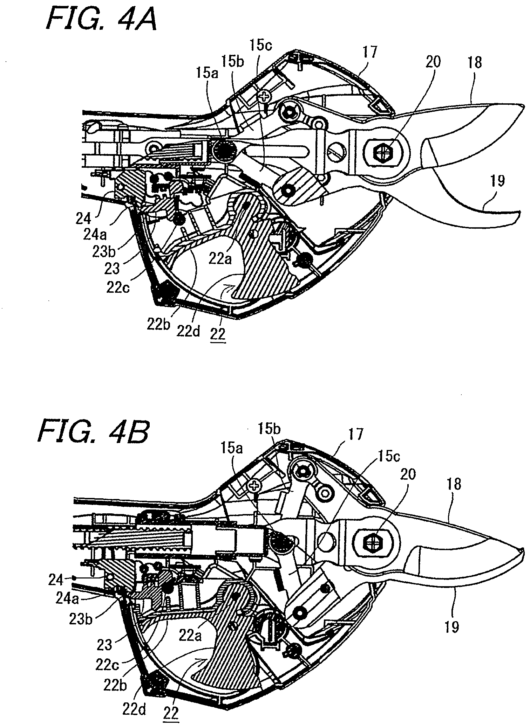

As illustrated in Figs. 4A and 4B, the aforementioned link mechanism 15, the first blade section 18 and the second blade section 19 are actuated by the rectilinear movement of the ball screw mechanism 13.

More specifically, when the drive shaft 15a moves in the direction of coming close to the blade shaft 20, the first link 15b and the second link 15c are actuated in the opening direction. Thus, the base portions 18b and 19b of the first blade section 18 and the second blade section 19 are displaced in a direction away from each other, the cutting portions 18a and 19a of the first blade section 18 and the second blade section 19 mutually rotate in the closing direction to perform the cutting operation.

Meanwhile, when the drive shaft 15a moves in a direction away from the blade shaft 20, the first link 15b and the second link 15c are actuated in the closing direction. Accordingly, the base portions 18b and 19b of the first blade section 18 and the second blade section 19 are displaced in the direction of coming close to each other, and the cutting portions 18a and 19a of the first blade section 18 and the second blade section 19 mutually rotate in the opening direction.

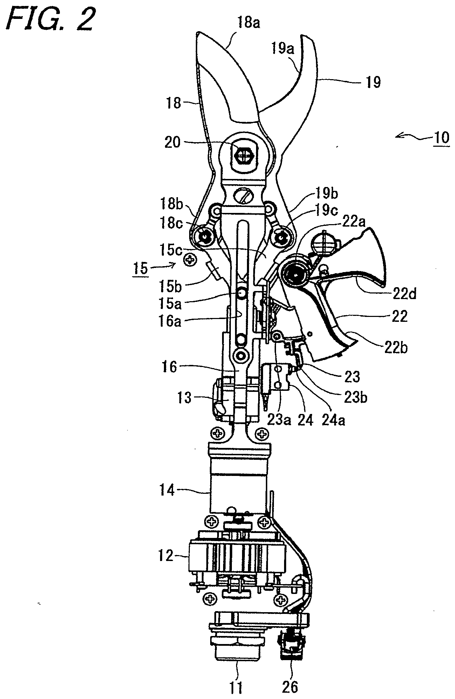

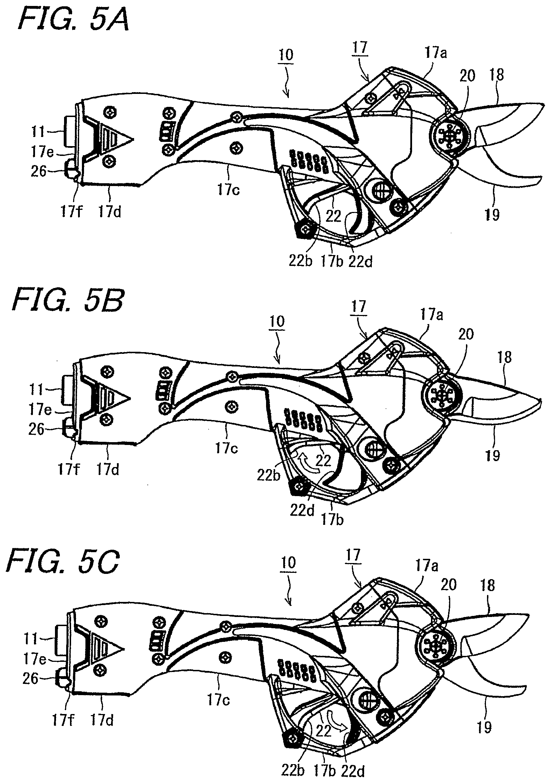

The manipulating member 22 according to the present embodiment is pivotally mounted around a shaft 22a. The manipulating member 22 has a substantially L-shape in the side view as illustrated in Fig. 2 or the like, and includes the first manipulating section 22b and the second manipulating section 22d extending in the respective different directions from the position where the shaft 22a is provided. The first manipulating section 22b is a manipulating section for controlling the operation of the motor 12, and performs (control) the opening and closing (cut) operations of the first blade section 18 and the second blade section 19 by controlling the operation of the motor 12. The second manipulating section 22d performs an auxiliary operation (for example, switching of operating mode). The first manipulating section 22b and the second manipulating section 22d are disposed to face each other, and are exposed to the inside of the manipulating member guard 17b to be manipulated. Thus, when a finger is inserted between the first manipulating section 22b and the second manipulating section 22d and the finger is moved backward (the grip 17c side) with respect to the shaft 22a as illustrated in Fig. 5B, the first manipulating section 22b can be manipulated. Also, when the finger is moved forward (the link cover 17a side) with respect to the shaft 22a as illustrated in Fig. 5C, the second manipulating section 22d can be manipulated. When the first manipulating section 22b or the second manipulating section 22d is manipulated, the manipulating member 22 rotates around the shaft 22a. Thus, when the first manipulating section 22b is pulled to come close to the grip 17c side, the electric scissors 10 performs the opening and closing operation of the first blade section 18 and the second blade section 19, and when the second manipulating section 22d is pressed away from the grip 17c side, the electric scissors 10 perform the auxiliary operation. The first manipulating section 22b and the second manipulating section 22d are disposed to be relatively immovable with each other, when the first manipulating section 22b (the second manipulating section 22d) is manipulated, the second manipulating section 22d (the first manipulating section 22b) also moves in the same direction as the first manipulating section 22b (the second manipulating section 22d) in conjunction with this manipulation. Therefore, the first manipulating section 22b and the second manipulating section 22d may not be simultaneously manipulated and are individually manipulated, and when manipulating the first manipulating section 22b and when manipulating the second manipulating section 22d, the manipulating member 22 is rotated in the different directions.

A roller 22c as illustrated in Figs. 4A and 4B is provided inside the first manipulating section 22b. The roller 22c is used to press an oscillating member 23 to be described later.

The oscillating member 23 is a member that oscillates to follow the rotation of the manipulating member 22 when the first manipulating section 22b of the manipulating member 22 is manipulated. The oscillating member 23 is allowed to oscillate around the oscillating shaft 23a, and is adapted to oscillate by the roller 22c when the manipulating member 22 is rotated. The oscillating member 23 is provided with a pressing portion 23b to face a contact point 24a of a micro switch 24 to be described later, and when oscillated by the roller 22c, the pressing portion 23b presses the contact point 24a of the micro switch 24.

The micro switch 24 is to detect that the first manipulating section 22b of the manipulating member 22 is manipulated. As described above, when the first manipulating section 22b of the manipulating member 22 is manipulated, since the oscillating member 23 is configured to turn on the micro switch 24, by detecting the turning on-off of the micro switch 24, it is possible to determine whether the first manipulating section 22b of the manipulating member 22 is manipulated.

The sensor 25 is to detect the rotational angle of the manipulating member 22. As the sensor 25, as long as it is possible to detect the manipulation of the manipulating member 22, anything may be used. However, for example, it is possible to use a potentiometer that is connected to the shaft 22a. When using the potentiometer, it is possible to specifically grasp the manipulation amount of the manipulating member 22.

The operation of the electric scissors 10 using the sensor 25 is controlled by a control device (not illustrated) that is built in the electric scissors 10 or the power source device. When the first manipulating section 22b of the manipulating member 22 is manipulated, and turning-on of the micro switch 24 is detected, the control device detects the rotational angle of the manipulating member 22 by the sensor 25. Further, the motor 12 is rotated in a normal direction in accordance with the detected angle to operate the two blade sections 18 and 19 in the closing direction. When the first manipulating section 22b of the manipulating member 22 is fully manipulated, the two blade sections 18 and 19 enter a fully closed state. When the first manipulating section 22b is released, the manipulating member 22 is returned to the initial position by a spring (not illustrated). When the sensor 25 detects that the manipulating member 22 is returned to the initial position, the sensor 25 sends a control signal to the control device. The control device which has received the control signal actuates the two blade sections 18 and 19 until the maximum opening angle, by rotating the motor 12 in the reverse direction. Thus, the two blade sections 18 and 19 are returned to the initial position. At the same time, since the manipulating member 22 is returned to the initial position and the micro switch 24 is turned off, the stop of the two blade sections 18 and 19 is maintained at the maximum opening angle.

The unlock switch 26 is a switch for releasing and shifting the electric scissors 10 from the locked state to the standby state. The electric scissors 10 according to the present embodiment are configured to be able to obtain, for the purpose of enhancing safety, the locked state in which the motor 12 does not operate even if the manipulating member 22 is manipulated, and the standby state in which the motor 12 is operated by manipulation of the manipulating member 22. When the main power source is turned on (i.e., when the power source switch provided in the power source device or cables is turned on), the unlock switch 26 is automatically controlled to the locked state. In order to be able to operate the electric scissors 10, there is a need to transition to the standby state from the locked state. In the present embodiment, it is adapted to transition to the standby state when simultaneously manipulating the manipulating member 22 and the unlock switch 26 in the locked state.

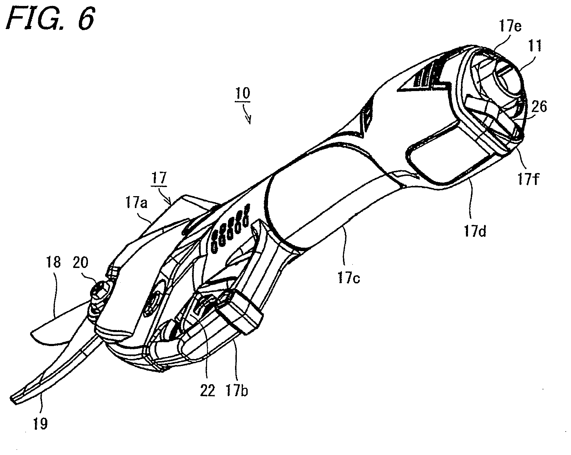

As illustrated in Fig. 6, the unlock switch 26 is provided at a rear side of the housing 17. Specifically, the unlock switch 26 is provided at the rear end 17d of the housing 17 and is provided at a position where a hand does not touch when a finger of the hand is on the manipulating member 22. Specifically, the unlock switch 26 is disposed to be pressed into the rear end surface 17e of the housing 17. On the rear end surface 17e of the housing 17, a guard wall 17f is provided so as to cover the periphery of the unlock switch 26 and has a structure for preventing something from being unintentionally pressed against the unlock switch 26.

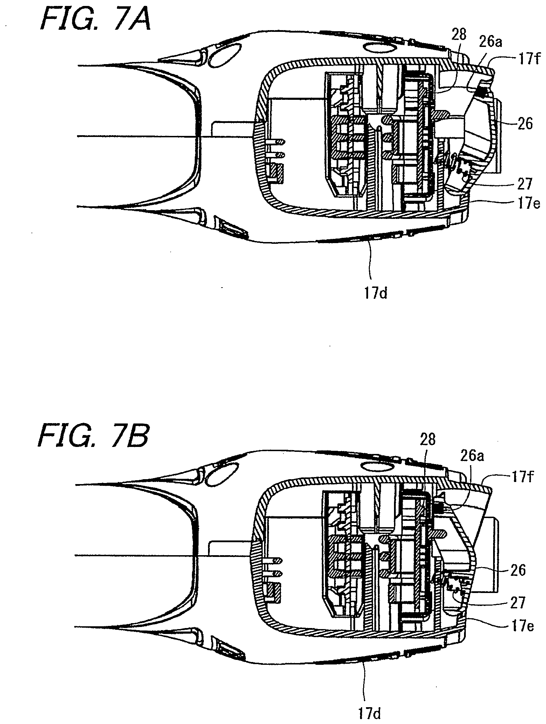

As illustrated in Figs. 7A and 7B, the unlock switch 26 is urged outward by a spring 27, and when pressing the unlock switch 26 against the urging force of the spring 27, a magnet 26a fixed to the distal end of the unlock switch 26 is adapted to approach the hole IC 28 arranged in the machine main body. Therefore, when the unlock switch 26 is pressed, its manipulation can be detected by the hole IC 28. The hole IC 28 outputs a manipulation signal of the unlock switch 26 to the control device, when detecting the manipulation of the unlock switch 26. A micro switch 24 (or the sensor 25) also outputs then a manipulation signal of the manipulating member 22 to the control device, upon detecting the manipulation of the manipulating member 22. The control device performs a control for transition from the locked state to the standby state, when receiving the manipulation signal of the unlock switch 26 and the manipulation signal of the manipulating member 22 at the same time. That is, when a user manipulates the manipulating member 22 in the state of pressing the unlock switch 26, or when the user presses the unlock switch 26 in the state of manipulating the manipulating member 22, the state of the machine is adapted to transition from the locked state to the standby state.

When the manipulating member 22 is not manipulated for a predetermined time or more in the standby state, it is automatically controlled to the locked state. Therefore, even if the electric scissors 10 are left in the middle of work, the safety can be secured.

Naturally, when the manipulating member 22 and the unlock switch 26 are manipulated at the same time in the standby state, on the contrary to the above, a transition from the standby state to the locked state is set. Therefore, when interrupting the use of the electric scissors 10, the erroneous manipulation can be prevented by setting the locked state. When not using the electric scissors 10, if the electric scissors 10 are in the locked state by the aforementioned manipulation, since it is possible to maintain the state in which the two blade sections 18 and 19 are closed, the safety can be improved.

In the above description, the state is adapted to transition when the first manipulating section 22b of the manipulating member 22 is manipulated. However, instead of this, when the second manipulating section 22d of the manipulating member 22 is manipulated, in other words, when the manipulating member 22 is manipulated in a direction different from the cutting operation, the state may be transitioned. In this case, when the second manipulating section 22d of the manipulating member 22 is manipulated, this manipulation is detected by the sensor 25. The sensor 25 which detects the manipulation of the second manipulating section 22d outputs a manipulation signal of the manipulating member 22 to the control device. The control device performs a control for transition from the locked state to the standby state or from the standby state to the locked state, upon receiving a manipulation signal of the unlock switch 26 and a manipulation signal of the manipulating member 22 at the same time.

According to this configuration, because it is possible to clearly distinguish between the manipulation for unlocking (manipulating the second manipulating section 22d) and the manipulation for cutting operation (manipulating the first manipulating section 22b), an erroneous manipulation is hard to occur.

As described above, according to the present embodiment, the electric scissors are configured to obtain a locked state that does not allow the operation of the motor 12, and a standby state in which the motor 12 is operated by the manipulation of the manipulating member 22. When the manipulating member 22 and the unlock switch 26 are manipulated at a predetermined timing in the locked state, the electric scissors are in the standby state. That is, based on the fact that the manipulating member 22 and the unlock switch 26 are manipulated at a predetermined timing, the state transition from the locked state to the standby state is set, and the machine enter an operable state. Thus, since the machine does not enter the operable state unless a special manipulation such as manipulating a plurality of switches is performed, the machine does not work even if children or people who do not know how to use the machine touch the machine. Because the machine is not operated unless a special manipulation is performed in this way, it is possible to effectively prevent an accident.

Just after the main power source is turned on, a locked state is adapted, and the machine is not operated only by turning on the main power source, even when manipulating the manipulating member 22. Thus, there is no risk even when children or people who do not know how to use the machine manipulate the manipulating member 22 by mistake.

Further, the unlock switch 26 is provided at a position of not touching by hand while putting fingers on the manipulating member 22. According to such a configuration, there is a low possibility that the unlock switch 26 and the manipulating member 22 are manipulated by chance. In other words, since there is a low possibility that children or people who do not know how to use the machine release the lock by mistake, it is possible to further enhance the safety.

When the unlock switch 26 and the manipulating member 22 are manipulated at the same time in the locked state, the standby state is set. According to such a configuration, since it is possible to transition from the locked state to the standby state by a simple manipulation, the workability is good.

When the manipulation is not detected over a predetermined time in the standby state, the locked state is set. According to such a configuration, the machine is not left for a long time in the standby state. Since the machine left between the works is not operated even when children or people who do not know how to use the machine manipulate the machine by mistake, it is possible to enhance the safety.

In the embodiment described, although the standby state is set when manipulating the manipulating member 22 and the unlock switch 26 at the same time in the locked state, the embodiment of the present invention is not limited thereto, the standby state may be set when the manipulating member 22 and the unlock switch 26 are manipulated in the locked state at a predetermined timing.

For example, after manipulating the manipulating member 22 in the locked state, when manipulating the unlock switch 26 within a predetermined time, the standby state may be set. Further, after manipulating the unlock switch 26 in the locked state, when manipulating the manipulating member 22 within a predetermined time, the standby state may be set. At that time, as the conditions of state transition, manipulation of one or both of the manipulating member 22 and the unlock switch 26 for a plurality of times, and a continue manipulation of one or both of the manipulating member 22 and the unlock switch 26 for a predetermined time may be adopted.

In the above-described embodiment, although the unlock switch 26 is provided on the rear end surface 17e of the housing 17, the switch may be provided at other locations without being limited thereto. If the switch is provided at a position of not touching by hand while putting the finger on the manipulating member 22, the switch may be provided at another location of the rear end 17d of the housing 17 or any location in front of the manipulating member guard 17b. When the main body (holding portion) of the electric scissors 10 is connected to the power source device by a cable, the unlock switch 26 may not be provided in the main body of the electric scissors 10. For example, the unlock switch 26 may be provided in the middle of the cable or the power source device. Thus, even when providing the unlock switch 26 in the middle of the cable or the power source device, the unlock switch 26 can be provided at a position of not touching by hand while putting the finger on the manipulating member 22.

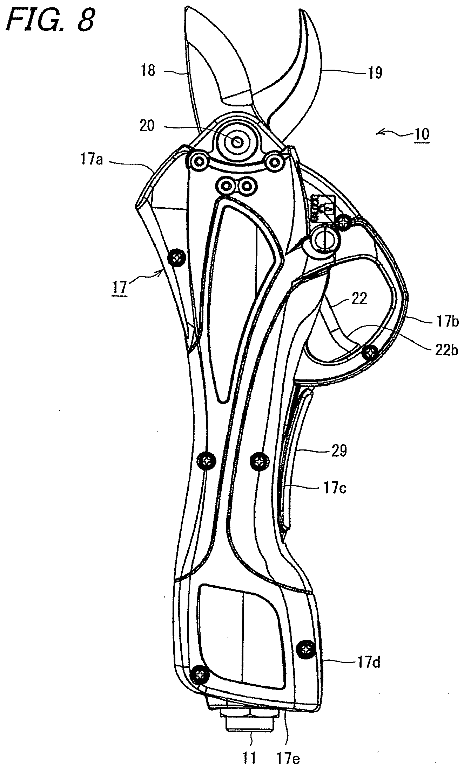

Furthermore, as illustrated in Fig. 8, an unlock switch 29 may be provided at the position of touching by hand while putting the finger on the manipulating member 22. The unlock switch 29 is provided in the grip 17c, so that the manipulation signal is detected when the grip 17c is grasped. When providing the unlock switch 29 at the position of touching by hand while putting the finger on the manipulating member 22 this manner, in order to reliably prevent an erroneous manipulation, it is desirable to complicate the manipulation for unlocking, by setting the continues manipulation of the manipulating member 22 for a predetermined time after the manipulation of the unlock switch 29 for a plurality of times as the condition of the state transition.

In the electric scissors 10 according to the above-described embodiment, both the two blade sections are a double-edged movable type, but is not limited thereto, the present invention can also be similarly applied to a single-edged movable electric scissors 10 in which one blade section is fixed and the other blade section is movable.

## Claims

1. Electric scissors (10) comprising:
two blade sections (18, 19);
a power source (12) that operates to close at least one of the two blade sections (18, 19);
a manipulating member (22) that controls an operation of the power source (12); and
an unlock switch (26) that is provided separately from the manipulating member (22),
wherein the electric scissors (10) are configured to be in a locked state which nullifies the operation of the power source (12), a standby state in which the power source (12) is operable by manipulation of the manipulating member (22), and a state in which the power source (12) operates to close at least one of the two blade sections (18, 19) based on manipulation on the manipulating member (22) after the standby state is set, and
when the manipulating member (22) and the unlock switch (26) are manipulated at the same time in the locked state, or when one of the manipulating member (22) and the unlock switch (26) is manipulated in the locked state and thereafter another of the manipulating member (22) and the unlock switch (26) is manipulated within a predetermined time, the electric scissors (10) are set in the standby state.

2. The electric scissors (10) according to claim 1,
wherein just after a main power source is turned on, the electric scissors (10) are in the locked state.

3. The electric scissors (10) according to claim 1 or 2,
wherein the unlock switch (26) is provided at a position where a hand does not touch when a finger of the hand is on the manipulating member (22).

4. The electric scissors (10) according to any one of claims 1 to 3,
wherein when any manipulation on the manipulation member (22) is not detected for a predetermined time or more in the standby state, the electric scissors (10) are set in the locked state.

5. The electric scissors (10) according to any one of claims 1 to 4, further comprising:
a housing (17);
wherein the unlock switch (26) is provided at a rear side of the housing (17).

## Patentansprüche

1. Elektrische Schere (10), umfassend:
zwei Klingenabschnitte (18, 19);
eine Energiequelle (12), die zum Schließen mindestens eines der beiden Klingenabschnitte (18, 19) dient;
ein Betätigungselement (22), das den Betrieb der Stromquelle (12) steuert; und
einen Entriegelungsschalter (26), der getrennt von dem Betätigungselement (22) vorgesehen ist,
wobei die elektrische Schere (10) so konfiguriert ist, dass sie sich in einem verriegelten Zustand, der den Betrieb der Stromquelle (12) aufhebt, einem Standby-Zustand, in dem die Stromquelle (12) durch Betätigung des Betätigungselements (22) betätigt werden kann, und einem Zustand befindet, in dem die Stromquelle (12) so arbeitet, dass sie mindestens einen der beiden Klingenabschnitte (18, 19) auf der Grundlage einer Betätigung des Betätigungselements (22) schließt, nachdem der Standby-Zustand eingestellt ist, und
wenn das Betätigungselement (22) und der Entriegelungsschalter (26) gleichzeitig im verriegelten Zustand betätigt werden, oder wenn eines von dem Betätigungselement (22) und dem Entriegelungsschalter (26) im verriegelten Zustand betätigt wird und danach ein anderes von dem Betätigungselement (22) und dem Entriegelungsschalter (26) innerhalb einer vorbestimmten Zeit betätigt wird, wird die elektrische Schere (10) in den Standby-Zustand versetzt.

2. Elektrische Schere (10) nach Anspruch 1,
wobei sich die elektrische Schere (10) unmittelbar nach dem Einschalten einer Hauptstromquelle in einem verriegelten Zustand befindet.

3. Elektrische Schere (10) nach Anspruch 1 oder 2,
wobei der Entriegelungsschalter (26) an einer Stelle vorgesehen ist, an der eine Hand nicht berührt wird, wenn ein Finger der Hand auf dem Betätigungselement (22) liegt.

4. Elektrische Schere (10) nach einem der Ansprüche 1 bis 3,
wobei die elektrische Schere (10) in den verriegelten Zustand versetzt wird, wenn für eine vorbestimmte Zeit oder länger im Standby-Zustand keine Betätigung an dem Betätigungselement (22) erkannt wird.

5. Elektrische Schere (10) nach einem der Ansprüche 1 bis 4, ferner umfassend:
ein Gehäuse (17);
wobei der Entriegelungsschalter (26) an einer Rückseite des Gehäuses (17) vorgesehen ist.

## Revendications

1. Ciseaux électriques (10) comprenant :
deux sections de lame (18, 19) ;
une source d'alimentation (12) qui fonctionne pour fermer au moins l'une des deux sections de lame (18, 19) ;
un élément de manipulation (22) qui commande un fonctionnement de la source d'alimentation (12) ; et
un interrupteur de déverrouillage (26) qui est prévu séparément par rapport à l'élément de manipulation (22),
dans lesquels les ciseaux électriques (10) sont configurés pour être dans un état verrouillé qui annule le fonctionnement de la source d'alimentation (12), un état de veille dans lequel la source d'alimentation (12) peut fonctionner par une manipulation de l'élément de manipulation (22) et un état dans lequel la source d'alimentation (12) fonctionne pour fermer au moins l'une des deux sections de lame (18, 19) sur la base de la manipulation de l'élément de manipulation (22) après la mise dans l'état de veille, et
lorsque l'élément de manipulation (22) et l'interrupteur de déverrouillage (26) sont manipulés en même temps dans l'état verrouillé, ou lorsque l'un de l'élément de manipulation (22) et de l'interrupteur de déverrouillage (26) est manipulé dans l'état verrouillé et que l'autre de l'élément de manipulation (22) et de l'interrupteur de déverrouillage (26) est ensuite manipulé dans un temps prédéterminé, les ciseaux électriques (10) sont mis dans l'état de veille.

2. Ciseaux électriques (10) selon la revendication 1,
dans lesquels immédiatement après la mise sous tension d'une source principale, les ciseaux électriques (10) sont dans l'état verrouillé.

3. Ciseaux électriques (10) selon la revendication 1 ou 2,
dans lesquels l'interrupteur de déverrouillage (26) est prévu à une position où une main ne le touche pas lorsqu'un doigt de la main se trouve sur l'élément de manipulation (22).

4. Ciseaux électriques (10) selon l'une quelconque des revendications 1 à 3,
dans lesquels lorsqu'une manipulation quelconque sur l'élément de manipulation (22) n'est pas détectée pendant un temps prédéterminé ou plus dans l'état de veille, les ciseaux électriques (10) sont mis dans l'état verrouillé.

5. Ciseaux électriques (10) selon l'une quelconque des revendications 1 à 4, comprenant en outre :
un boîtier (17) ;
dans lesquels l'interrupteur de déverrouillage (26) est prévu sur un côté arrière du boîtier (17).
